# EUROPÄISCHE PATENTSCHRIFT

(11) **EP 1 619 019 B1**
(45) Veröffentlichungstag und Bekanntmachung des Hinweises auf die Patenterteilung: **11.09.2013**
(21) Anmeldenummer: 04405469.0
(22) Anmeldetag: 22.07.2004
(51) Int. Cl.: B32B 27/06, E04B 1/90

(54) **Versteifungskörper**
Stiffening sheet
Elément de renforcement

(43) Veröffentlichungstag der Anmeldung: 25.01.2006
(73) Patentinhaber: 3A Technology & Management AG, 8212 Neuhausen am Rheinfall (CH)
(72) Erfinder: Behre, Kurt, 49078 Osnabrück (DE); Klenke, Detlev, 49134 Wallenhorst (DE); Walsch, Thomas, 49525 Lengerich (DE); Seidel, Siegfried, 49205 Hasbergen (DE)
(74) Vertreter: Gernet, Samuel Andreas

(56) Entgegenhaltungen:
- DE-A- 2 242 555
- US-A- 4 276 339

## Beschreibung

Die Erfindung betrifft einen Versteifungskörper nach dem Oberbegriff der Anspruchs 1.

Zur Erhöhung der Belastbarkeit der Dachfläche eines Fahrzeugs wird die Dachaussenhaut vom Fahrzeuginnern her versteift. Mit der über Klebstoffraupen oder einen vollflächig aufgetragenen Klebstoff mit der Dachhaut verklebten Dachversteifung wird gleichzeitig eine Schalldämmung und Wärmeisolierung erreicht.

Eine aus der EP-B-O 825 066 bekannte Dachversteifung für Fahrzeuge besteht aus einer einseitig mit einer Deckschicht verbundenen Platte aus geschäumtem Kunststoff. Zur Herstellung dieser Dachversteifung wird zunächst eine beidseitig mit einer Deckschicht verbundene Platte aus geschäumtem Kunststoff hergestellt. Anschliessend wird die geschäumte Platte mittig in zwei einseitig mit einer Deckschicht versehene Platten gespalten und mit Übermass auf die Abmessungen der Dachhaut zugeschnitten. Eine einzelne Deckschicht wird ebenfalls mit Übermass auf die Abmessung der Dachhaut zugeschnitten und zusammen mit einer Klebstoffschicht zwischen der Schaumplatte und der einzelnen Deckschicht in einem der Wölbung und Kontur der Dachhaut entsprechenden Formwerkzeug auf die endgültige Form umgeformt und verklebt. Kurz vor Öffnung des Formwerkzeugs wird das Formteil zur passenden Dachversteifung ausgestanzt. Der geschäumte Kunststoff ist ein Polyurethanschaum, die Deckschichten bestehen aus Kraftlinern. Die zur Fertigung der Dachversteifung erforderlichen teuren Formwerkzeuge führen zu entsprechend hohen Endkosten.

Auch bei dem aus der WO-A-01/26 878 bekannten Verfahren zur Herstellung einer Dachversteifung für Fahrzeuge wird zunächst eine Platte aus geschäumtem Kunststoff mit beidseitig angeordneten Deckschichten hergestellt und diese anschliessend durch mittiges Spalten in zwei einseitig mit einer Deckschicht versehene Schaumplatten geschnitten. Die endgültige Formgebung der Platte zur Dachversteifung erfolgt hier durch direktes Verkleben der unbeschichteten Seite der Platte mit der Dachhaut. Bei diesem Fertigungsverfahren entfallen die teuren Formwerkzeuge. Die nur einseitige Belegung der Schaumplatte mit einer Deckschicht aus einem Kraftliner oder einem Vlies hat jedoch eine Verminderung der Steifigkeit zur Folge.

Die DE-A-22 42 555 offenbart eine Verbundplatte zur thermischen oder akustischen Isolierung von Wandungen oder zur Polsterung. Die Leichtstoffplatte besteht beispielsweise aus geschäumtem Polyurethan mit einem ein- oder beidseitig aufgeklebten Überzug aus beispielsweise einer Folie aus Krepppapier, Kunstleder oder Leder. Die Verbundplatte zeigt im Vergleich zu einer Schaumstoffplatte ohne Überzug ein erheblich besseres Biegeverhalten, so dass sie auch um Rohrwandungen gewickelt werden kann. Beim Biegen der Verbundplatte erfolgt auf der konkaven Seite der Biegung eine Stauchung der Schaumstoffplatte, während auf der konvexen Seite der Überzug höchstens eine geringfügige und insbesondere über die Krümmung gleichmässige Dehnung des Plattenmaterials zulässt. Auf diese Weise kann ein Bruch des an sich beim Biegen zum Brechen neigenden Isolier- bzw. Polstermaterial verhindert werden.

Aus der US-A-4 276 339 sind Krepppapierlaminate mit hohem Absorptionsvermögen für Flüssigkeiten bekannt. Die Krepppapiere werden mit einer wässrigen, geschäumten Dispersion oder Lösung eines filmbildenden Materials zur Bildung einer Gelschicht behandelt.

Der Erfindung liegt die Aufgabe zugrunde, einen Versteifungskörper der eingangs genannten Art zu schaffen, der bei gleicher Dimensionierung eine gegenüber herkömmlichen Versteifungskörpern erhöhte Biegefestigkeit aufweist.

Zur erfindungsgemässen Lösung der Aufgabe führt ein Versteifungskörper mit dem Merkmalen des Anspruchs 1.

Die Materialschicht ist zur Bildung der Versteifungselemente gekreppt. d.h., die Versteifungselemente werden beim Kreppen der Materialschicht erzeugt.

Die Erfindung macht sich die Tatsache zunutze, dass Kreppungen infolge der rechtwinklig zur Kreppung auftretenden Zunahme der Dicke des gekreppten Werkstoffes die Quersteifigkeit des Grundmaterials erhöhen und damit zu einer besseren Biegefestigkeit des Versteifungskörpers führen.

Sind auf beiden Seiten der Leichtstoffplatte Deckschichten vorhanden, müssen nicht notwendigerweise beide Deckschichten eine gekreppte Materialschicht umfassen, sondern es kann eine Deckschicht gekreppt sein und die andere Deckschicht kann in glatter oder planer Konfiguration vorliegen.

Die gekreppte Materialschicht ist bevorzugt ein Krepppapier, eine gekreppte Kunststoff- oder Metallfolie oder eine gekreppte mehrschichtige Folie mit einzelnen Schichten aus einer oder mehreren Papierschichten, Kunststofffolien und/oder Metallfolien. Als Metallfolie eignet sich insbesondere eine Aluminiumfolie.

Die biegsame Leichtstoffplatte besteht bevorzugt aus einem Polyurethanschaum, vorzugsweise aus einem geschlossenzelligen Polyurethanschaum mit einem Raumgewicht von etwa 30 bis 55 g/m³.

Eine bevorzugte gekreppte Materialschicht besteht aus einer Krepppapierschicht, die unbeschichtet oder auch ein- oder beidseitig mit einem Kunststofffilm aus beispielsweise Polyethylen, Polypropylen oder Polyethylenterephthalat als Wasserdampfsperre beschichtet sein kann. Anstelle einer Beschichtung mit einem Kunststofffilm kann die Krepppapierschicht auch mit wasserabweisenden, flammhemmenden und/oder Schimmel- und Fäulnis verhindernden Stoffen imprägniert sein.

Die erfindungsgemässen Versteifungskörper können mit Vorteil überall dort eingesetzt werden, wo die Aussenhaut eines Bauteils vor Einbeulungen, die durch äussere Krafteinwirkungen auftreten, geschützt werden soll. Ein bevorzugter Einsatzbereich sind Dachversteifungen für Fahrzeuge, wobei auch Dachhimmel (Headliner), gegebenenfalls mit der Dachhautverstärkung kombiniert, mit den Verstärkungskörpern ausgestattet werden können. Weitere Anwendungen des erfindungsgemässen Versteifungskörpers sind die Aussteifung flächiger Beplankungen und Formkörper aus Blech oder Kunststoff aller Art, wie z.B. Motorhauben, Kühlschranktüren und weiterer gegen Eindrücken zu verstärkender Bauteile.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- - Fig. 1: einen Querschnitt durch eine erste Ausführungsform einer Dachversteifung;
- - Fig. 2: einen Querschnitt durch die mit einer Dachhaut eines Fahrzeuges verklebten Dachversteifung von Fig. 1;
- - Fig. 3: einen Querschnitt durch eine zweite Ausführungsform einer Dachversteifung;
- - Fig. 4: einen Querschnitt durch einen Teil einer Dachversteifung mit gekreppter Deckschicht;
- - Fig. 5: eine Anlage zur Herstellung eines gekreppten Folienbandes.

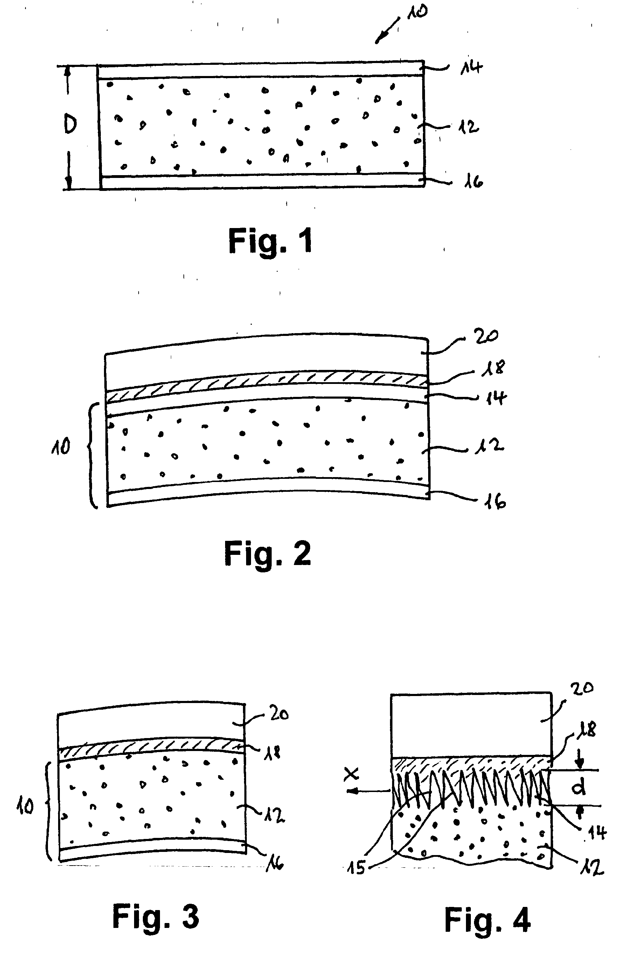

Eine Dachversteifung 10 besteht gemäss Fig. 1 aus einer Platte 12 aus geschäumtem Kunststoff, z.B. Polyurethanschaum, mit beidseitig angeordneten Deckschichten 14, 16 aus einer gekreppten Materialschicht, z.B. Krepppapier. Die Gesamtdicke D der Dachversteifung 10 beträgt beispielsweise etwa 5 bis 10 mm.

Die Herstellung dieses Sandwichmaterials erfolgt üblicherweise in der Form von Bandmaterial in einer Doppelbandpresse, in der gleichzeitig mit dem Aufschäumen des Kunststoffes zum geschäumten Bandmaterial eine feste Verbindung mit den in Bandform zugeführten Deckschichten erzeugt wird. Die einzelnen Dachversteifungen werden vom Bandmaterial abgelängt und zu einem an die Dachhaut angepassten Formteil gestanzt.

Wie in Fig. 2 gezeigt, wird die Dachversteifung 10 mittels eines in Raupenform oder vollflächig aufgetragenen Klebstoffs 18 mit einer Dachhaut 20 eines in der Zeichnung nicht wiedergegebenen Fahrzeugs verklebt.

Die in Fig. 3 gezeigte Variante einer Dachversteifung 10 besteht aus einer nur einseitig mit einer Deckschicht 16 verbundenen Schaumplatte 12, die mit ihrer unbeschichteten Seite über eine Klebstoffschicht 18 mit der Dachhaut verklebt ist. Die Herstellung dieser Variante erfolgt auf die oben beschriebene Weise in einer Doppelbandpresse, wobei das beidseitig mit Deckschichten 14, 16 versehene geschäumte Bandmaterial anschliessen mittig in zwei einseitig mit einer Deckschicht versehene Teile gespalten wird.

Aus der in Fig. 4 dargestellte Dachversteifung 10 mit einer Deckschicht 14 aus beispielsweise Krepppapier, welches von der Oberfläche der Schaumplatte 12 aufragende Versteifungselemente 15 bildet, ist die infolge der rechtwinklig zur Krepprichtung auftretenden Zunahme der Dicke d des gekreppten Werkstoffes erhöhte Quersteifigkeit des gekreppten Grundmaterials gegenüber einer nicht gekreppten Materialschicht ohne weiteres verständlich. Die in Längsrichtung x etwas verminderte Längssteifigkeit führt zu einer leichteren Verformbarkeit in dieser Richtung, wodurch die Dachversteifung problemlos ohne vorgängige Umformung in einem Formwerkzeug direkt mit der Dachhaut verklebt werden kann.

Während des Stanzvorgangs eingebrachte Rillen oder Nuten können zusätzlich in der Querrichtung versteifend wirksam werden und eine auch längs wirkende Verformungssteife bewirken.

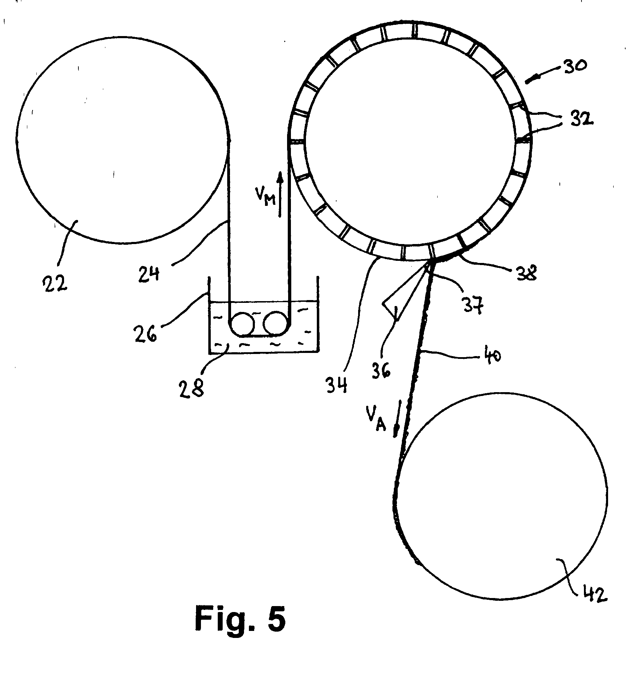

Eine in Fig. 5 gezeigte Anlage zur Herstellung eines gekreppten Folienbandes 40 umfasst eine erste Wickelrolle 22 mit dem ungekreppten Folienband 24, ein Bad 26 mit flüssigem Gleitmittel 28 zur Benetzung des Folienbandes 24, eine zylinderförmige Vakuumtrommel 30 mit einer Vielzahl von an der Mantelfläche 34 der Vakuumtrommel 30 endenden Saugöffnungen 32, einen Rakel 36, dessen Blattspitze 37 im wesentlichen bis auf die Mantelfläche 34 reicht und sich über die gesamte Breite der Vakuumtrommel 30 erstreckt, und eine zweite Wickelrolle 42 zum Aufwickeln des gekreppten Folienbandes 40.

Beim Betrieb der Anlage wird das ungekreppte Folienband 24, beispielsweise eine Aluminiumfolie, von der ersten Wickelrolle 22 abgewickelt und nachfolgend durch das Bad 26 mit dem flüssigen Gleitmittel 28, beispielsweise Wasser, geführt. Das mit dem flüssigen Gleitmittel 28 benetzte Folienband 24 wird anschliessend an die Vakuumtrommel 30 herangeführt und liegt deren Mantelfläche 34 an. Die Vakuumtrommel 30 ist an eine in der Zeichnung nicht dargestellte Unterdruckquelle, z.B. eine Vakuumpumpe, angeschlossen, so dass im Trommelinnern gegenüber der Aussenatmosphäre ein Unterdruck herrscht. Über die an der Mantelfläche 34 endenden Saugöffnungen baut sich auch zwischen dem Folienband 24 und der Mantelfläche 34 ein Unterdruck auf, so dass das Folienband 24 der Mantelfläche 34 satt anliegt und an dieser festgesaugt wird.

In einem Staubereich 38 vor dem Rakel 36 staut sich das das mit dem Gleitmittel 28 benetzte Folienband 24 auf und wird gleichmässig gekreppt. Über die zweite Wickelrolle 42 wird das gekreppte Folienband 40 beim Rakel 36 von der Mantelfläche 34 der Vakuumtrommel 30 abgezogen und auf der zweiten Wickelrolle 42 aufgewickelt.

Der Grad der Kreppung des gekreppten Folienbandes 40 wird über die Rotationsgeschwindigkeiten der Vakuumtrommel 30 und der zweiten Wickelrolle 42 geregelt. Die Wickelrolle 42 dient hier gleichzeitig als Abzugseinrichtung für das gekreppte Folienband 40. Die Rotationsgeschwindigkeiten der Vakuumtrommel 30 und der zweiten Wickelrolle 42 werden so eingestellt, dass die Abzugsgeschwindigkeit V_{A}, mit der das gekreppte Folienband 40 von der Mantelfläche 34 der Vakuumtrommel 30 abgezogen wird, kleiner ist als die der Mantelgeschwindigkeit V_{M} entsprechende Laufgeschwindigkeit des ungekreppten Folienbandes 24. Je grösser die Differenz zwischen V_{M} und V_{A} ist, desto dichter wird die Kreppung des Folienbandes 24 im Staubereich 38 vor dem Rakel 36, was einem entsprechend höheren Kreppgrad entspricht.

Das auf der zweiten Wickelrolle aufgewickelte gekreppte Folienband 42 kann direkt als Deckschicht 14, 16 zur Herstellung eines Versteifungskörpers 10 mit einer biegsamen Leichtstoffplatte 12, wie sie beispielsweise für die vorstehend beschriebene Dachversteifung 10 verwendet wird, eingesetzt werden.

Wird mit der vorstehend beschriebenen Anlage ein aus einer Kunststofffolie oder aus einem mehrschichtigen, einen Kunststofffilm enthaltenden Laminat bestehendes Folienband gekreppt, so wird die Vakuumtrommel 30 so aufgeheizt, dass die Kunststofffolie oder der Kunststofffilm den zur Durchführung der Kreppung erforderliche Erweichungspunkt erreicht.

## Patentansprüche

1. Versteifungskörper mit einer biegsamen Leichtstoffplatte (12) aus einem geschäumten Kunststoff mit wenigstens einer mit einer Oberfläche der Platte (12) verbundenen Deckschicht (14, 16), wobei die Deckschicht/en (14, 16) wenigstens eine Materialschicht mit einer Vielzahl von durch die Materialschicht durch Kreppen der Materialschicht gebildeten und von der Plattenoberfläche aufragenden Versteifungselementen (15) umfasst/umfassen,
**dadurch gekennzeichnet, dass**
zur Erzeugung einer festen Verbindung zwischen dem geschäumten Kunststoff der Leichtstoffplatte (12) und der/den Deckschicht/en (14, 16) der Kunststoff der Leichtstoffplatte (12) gegen die Deckschicht/en (14, 16) geschäumt ist.

2. Versteifungskörper nach Anspruch 1, **dadurch gekennzeichnet, dass** die gekreppte Materialschicht ein Krepppapier, eine gekreppte Kunststoff- oder Metallfolie oder eine gekreppte mehrschichtige Folie mit einzelnen Schichten aus einer oder mehreren Papierschichten, Kunststofffolien und/oder Metallfolien ist.

3. Versteifungskörper nach Anspruch 1 oder 2, **dadurch gekennzeichnet, dass** die biegsame Leichtstoffplatte (12) aus einem Polyurethanschaum, vorzugsweise aus einem geschlossenzelligen Polyurethanschaum mit einem Raumgewicht von 30 bis 55 g/m³ besteht.

4. Versteifungskörper nach einem der Ansprüche 1 bis 3, **dadurch gekennzeichnet, dass** die gekreppte Materialschicht eine wenigstens einseitig mit einem Kunststofffilm beschichtete Krepppapierschicht ist.

5. Versteifungskörper nach einem der Ansprüche 1 bis 4, **dadurch gekennzeichnet, dass** die gekreppte Materialschicht eine mit wasserabweisenden, flammhemmenden und/oder Schimmel- und Fäulnis verhindernden Stoffen imprägnierte Krepppapierschicht ist.

6. Verwendung eines Versteifungskörpers nach einem der vorangehenden Ansprüche zur Versteifung von flächigen Beplankungen, Formkörpern und Bauteilen mit einer gegen Eindrücken zu verstärkenden Haut aus Blech oder Kunststoff.

7. Verwendung nach Anspruch 6 als Dachversteifung für Fahrzeuge.

## Claims

1. Stiffening member comprising a flexible light material board (12) made of a foamed plastics material having at least one cover layer (14, 16) which is connected to a surface of the board (12), the cover layer(s) (14, 16) comprising at least one material layer having a plurality of stiffening elements (15) which are formed by the material layer by creping the material layer and project from the surface of the board, **characterised in that**, in order to produce a rigid connection between the foamed plastics material of the light material board (12) and the cover layer(s) (14, 16), the plastics material of the light material board (12) is foamed against the cover layer(s) (14, 16).

2. Stiffening member according to claim 1, **characterised in that** the creped material layer is a crepe paper, a creped plastics or metal film, or a creped multilayer film having individual layers of one or more paper layers, plastics films and/or metal films.

3. Stiffening member according to either claim 1 or claim 2, **characterised in that** the flexible light material board (12) consists of a polyurethane foam, preferably a closed-cell polyurethane foam having a density of from 30 to 55 g/m³.

4. Stiffening member according to any of claims 1 to 3, **characterised in that** the creped material layer is a crepe paper layer which is coated with a plastics film on at least one side.

5. Stiffening member according to any of claims 1 to 4, **characterised in that** the creped material layer is a crepe paper layer which is impregnated with substances which are water-repellent, flame-retardant, and/or prevent the formation of mould and rot.

6. Use of a stiffening member according to any of the preceding claims for stiffening planar sheetings, moulds and components having a skin made of sheet metal or plastics material for reinforcing against impacts.

7. Use according to claim 6 as a roof stiffener for vehicles.

## Revendications

1. Corps de renfort comprenant une plaque de matériau léger (12) flexible constituée d'une matière plastique sous forme de mousse, avec au moins une couche de recouvrement (14, 16) reliée à la surface de la plaque (12), la/les couche/s de recouvrement (14, 16) comprenant au moins une couche de matière avec un grand nombre d'éléments de renfort (15) faisant saillie de la surface de la plaque et formés par la couche de matière, par crêpage de la couche de matière,
**caractérisé**
**en ce que** pour produire une liaison fixe résistante entre la matière plastique sous forme de mousse de la plaque de matériau léger (12) et la/les couche/s de recouvrement (14, 16), la matière plastique de la plaque de matériau léger (12) est appliquée par moussage contre la/les couche/s de recouvrement (14, 16).

2. Corps de renfort selon la revendication 1, **caractérisé en ce que** la couche de matière crêpée est un papier crêpé, une feuille de matière plastique ou de métal crêpée, ou une feuille crêpée à couches multiples comprenant des couches individuelles en une ou plusieurs couches de papier, feuilles de matière plastique et/ou feuilles de métal.

3. Corps de renfort selon la revendication 1 ou la revendication 2, **caractérisé en ce que** la plaque de matériau léger (12) flexible est constituée d'une mousse de polyuréthanne, de préférence une mousse de polyuréthanne à cellules fermées d'un poids spécifique de 30 à 55 g/m³.

4. Corps de renfort selon l'une des revendications 1 à 3, **caractérisé en ce que** la couche de matière crêpée est une couche de papier crêpé revêtue au moins sur une face par un film de matière plastique.

5. Corps de renfort selon l'une des revendications 1 à 4, **caractérisé en ce que** la couche de matière crêpée est une couche de papier crêpé imprégnée de substances repoussant l'eau, ignifuges et/ou anti-moisissures ou anti-pourritures.

6. Utilisation d'un corps de renfort selon l'une des revendications précédentes pour renforcer ou rigidifier des habillages de surface, des corps de forme moulés et des pièces avec une enveloppe en tôle ou en matière plastique à renforcer à l'encontre de l'enfoncement.

7. Utilisation selon la revendication 6 en tant que renfort de toit ou pavillon pour véhicule.
